Europäisches Patentamt

(19) European Patent Office

Office européen des brevets

(11) Publication number: **0 156 419**
**A2**

(12) # EUROPEAN PATENT APPLICATION

(21) Application number: **85200304.5**

(22) Date of filing: **04.03.85**

(51) Int. Cl.⁴: **B 65 G 19/14**

(30) Priority: **27.03.84 IT 2024584**

(43) Date of publication of application:
**02.10.85 Bulletin 85/40**

(84) Designated Contracting States:
**AT BE CH DE FR GB IT LI LU NL SE**

(71) Applicant: **Pirovano, Camillo**
**Localitá Cavigiolo**
**I-22052 Cernusco Lombardone (Como)(IT)**

(72) Inventor: **Pirovano, Camillo**
**Localitá Cavigiolo**
**I-22052 Cernusco Lombardone (Como)(IT)**

(74) Representative: **Martegani, Franco**
**Ingg. GUZZI e RAVIZZA S.r.l. Via Boccaccio, 24**
**I-20123 Milano(IT)**

(54) Conveying rope with plastic scraping elements.

(57) A conveying rope is provided with plastic scraping elements which are fixed on the rope of synthetic material at predetermined constant intervals by means of injection molding. For the purpose of increasing the unstringing load for the scraping elements which are directly molded on the rope, said rope is provided with a flexible core which carries nodules of suitable shape and tenaciously fixed to said core, so as to provide along the length of the rope a plurality of thickenings for firmly holding in place the scraping elements.

Fig.3

EP 0 156 419 A2

# CONVEYING ROPE WITH PLASTIC SCRAPING ELEMENTS

The present invention relates to a conveying rope with plastic scraping elements. Conveying ropes of this type are used for conveying flowing materials such as granulated materials, powdered materials, incoherent materials and the like, for example in industrial and zootechnical handling equipments.

It is known to use metal ropes on which plastic scraping elements, such as discs, tabs or the like, are fixed directly on the rope by means of injection molding at predetermined constant intervals.

Since the conveying ropes work in a closed-loop circuit, even with remarkable length and with varying and tortuous paths, such as those provided for example in the fodder conveying equipments for breeding plants, said conveying ropes undergo high tensile stresses and frequent bending stresses which cause in a more or less long period of time the fatigue failure of the metal rope. The ensuing necessary replacement of the conveying metal rope implies a significant labour and a halting of the equipment for a more or less long period of time.

For jointing the end portions of a metal rope in a closed-loop circuit, suitable and complex coupling devices must be provided.

In addition, the conveying ropes of this type are of a remarkable weight, especially if they are of significant length.

To eliminate the above drawbacks of the known conveying ropes of this type it has been devised to use a rope of synthetic material in lieu of a metal rope; in fact a rope of synthetic material exhibits much better elastic characteristics and resistance to bending stress than a metal rope, even in the case of repeated flexure efforts with very small bending radius.

However a rope of synthetic material with plastic scraping elements directly injection molded thereon undergoes fairly remarkable elongations when subject to tensile stresses, and the inherent elasticity reduces the adhesion of said elements to the rope, so that said elements when hindered by external resistances can slide on the rope and get unstrung.

The object of the present invention is to provide a conveying rope with plastic scraping elements molded on a rope of synthetic material in which any sliding or unstringing of said elements is prevented even when high loads on said elements try to cause such sliding and unstringing.

To this end, according to the invention it is provided a conveying rope with plastic scraping elements characterized in that in the rope of synthetic material there is included a flexible core provided at predetermined constant intervals with a plurality of nodules tenaciously fastened thereto, said nodules forming along said rope correspondent thickenings for firmly holding in place said scraping elements.

According to one characteristic of the invention, the scraping elements can be either molded directly on said thickenings or can be molded on the rope at intervals between two near related thickenings.

Said nodules, for example with the shape of small balls, are carried by the flexible core and provide, along the rope at predetermined evenly spaced positions corresponding to the desired pitch of the scraping elements, anchorage points for said scraping elements and prevent any sliding between the rope and said scraping elements even if the latter are subject to high slackening loads.

Said core may be implemented by a string or by bundles of filaments of suitable material, said core is built-in as a core portion of the rope of synthetic material during its known manufacture and on the resulting rope, which rope therefore is provided at constant intervals of its length with thickenings caused by the nodules of the inner core, scraping elements are molded, for example disc-shaped elements with side coaxial hubs of plastic material.

The invention will be described in detail hereinafter, with reference to the accompanying drawings in which:
Fig. 1 shows a portion of the core,
Fig. 2 shows the rope including the core of Fig. 1,
Fig. 3 shows the finished conveying rope with the scraping elements (one of said elements being illustrated in sectional view) directly molded on the thickenings, and
Fig. 4 shows the rope with the scraping elements molded between the thickenings.

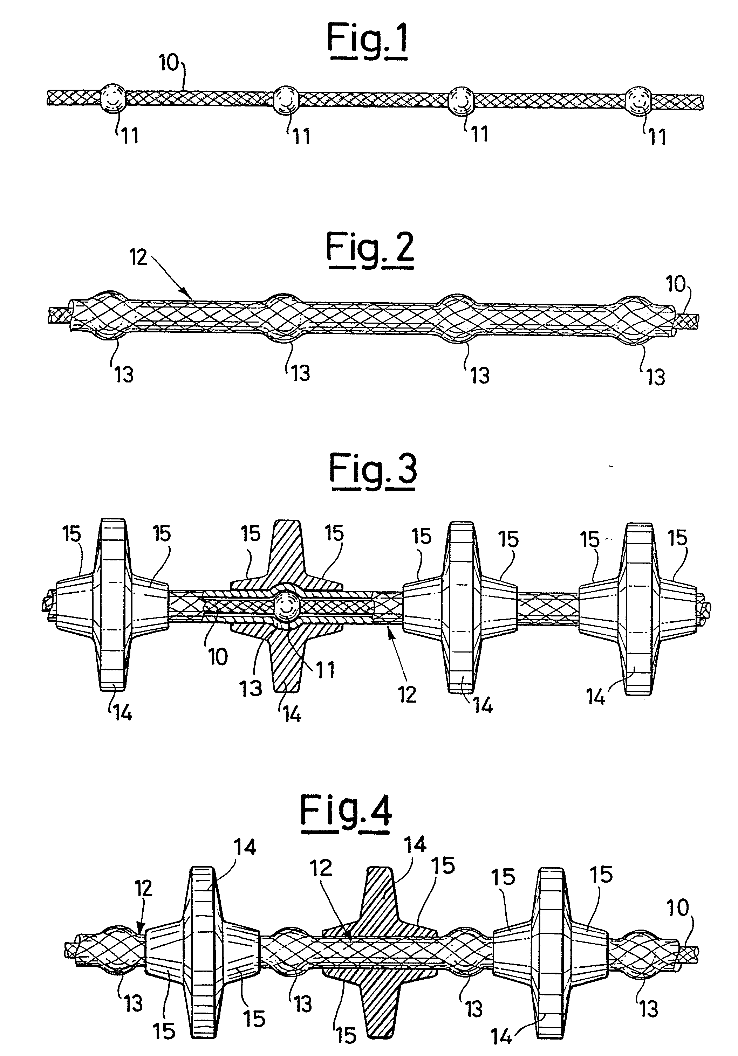

With reference to the drawings, Fig. 1 shows a string 10 of synthetic material and said string may be a strand or a bundle of filaments which carries nodules 11 at predetermined constant intervals, and said nodules in the example shown can be small balls of plastic material. The nodules 11 are directly fixed on the string 10 by injection molding.

The string 10 provided with the nodules 11 is intended to form the core of a rope of synthetic material, shown with the reference numeral 12 in Fig. 2, said rope presenting therefore in the direction of its longitudinal axis a plurality of thickenings 13 caused by said nodules 11. The manufacturing of the rope including the core can be done by known methods used for manufacturing ropes of synthetic material, and said methods do not need any further description.

On the rope 12 thus manufactured, by direct injection molding scraping means are fixed, said scraping means in the case shown in Fig. 3 being implemented by discs 14 provided at both ends with tubular hubs 15, preferably tapered hubs, which lie axially along the length of rope 12 and are integral with the respective discs 14.

As is apparent particularly from the portion in sectional view in Fig. 3, any disc 14 with its side extensions 15 is located centrally on a respective thickening 13 of the rope 12 caused by a respective nodule 11 on the core 10.

In this way any scraping element 14, 15 is fastened to the rope 12 in respect of slackening and can resist to high unstringing loads.

In another embodiment, as shown in Fig. 4, the scraping elements 14, 15 are molded on the rope 12 at the length intervals between the thickenings 13.

It is to be understood that the shape of the nodules does not need to be as illustrated, but can be varied. For example the nodules can have a shape with sharp edges, or any other shape suitable for being incorporated into the rope during its manufacturing. Also the scraping elements can be of a shape different from the disc shape shown in the drawings.

- 1 -

0156419

CLAIMS

1. Conveying rope with plastic scraping elements to convey flowing materials, charaterized in that is is comprised of a rope in synthetic material including a flexible core provided at predetermined constant intervals with a plurality of nodules tenaciously fastened thereto, said nodules forming along said rope correspondent thickenings for firmly holding in place said scraping elements.

2. Conveying rope according to claim 1, characterized in that said scraping elements are molded on said thickenings.

3. Conveying rope according to claim 1, characterized in that said scraping elements are molded on said rope at the length intervals between said thickenings.

4. Conveying rope according to claim 1, characterized in that said core is a string of synthetic material and said nodules are of plastic material molded on said string.

5. Conveying rope according to claim 1, characterized in that said core is implemented by a bundle of filaments of synthetic material and said nodules are of plastic material and are molded on said bundle.

6. Conveying rope according to claim 2, characterized in that said nodules are ball shaped and of plastic material.

Fig.1

Fig.2

Fig.3

Fig.4